# EUROPÄISCHE PATENTSCHRIFT

(11) **EP 2 207 647 B1**
(45) Veröffentlichungstag und Bekanntmachung des Hinweises auf die Patenterteilung: **13.04.2011**
(21) Anmeldenummer: 08842407.2
(22) Anmeldetag: 14.10.2008
(51) Int. Cl.: B25J 9/10, F16C 17/10, F16C 17/26, F16C 19/18, F16C 19/38, F16C 35/06

(54) **MANIPULATOR MIT DREIRINGLAGER ZWISCHEN ZWEI ÄUSSEREN SCHWENKARMEN UND EINER PLATTFORM**
MANIPULATOR HAVING A THREE-RING BEARING BETWEEN TWO OUTER PIVOT ARMS AND A PLATFORM
MANIPULATEUR ÉQUIPÉ D'UN PALIER À TROIS BAGUES ENTRE DEUX BRAS PIVOTANTS EXTERNES ET UNE PLATE-FORME

(30) Priorität: 23.10.2007 DE 102007050905
(43) Veröffentlichungstag der Anmeldung: 21.07.2010
(73) Patentinhaber: Schaeffler Technologies GmbH & Co. KG, 91074 Herzogenaurach (DE)
(72) Erfinder: HESTERMANN, Jörg-Oliver, 91086 Aurachtal (DE)
(86) Internationale Anmeldenummer: PCT/EP2008/063762
(87) Internationale Veröffentlichungsnummer: WO 2009/053270

(56) Entgegenhaltungen:
- EP-A- 0 316 998
- WO-A-93/07997
- WO-A-2007/122181
- DE-A1- 19 603 701
- DE-A1-102004 035 587
- DE-A1-102007 014 130
- SU-A1- 921 848
- SU-A1- 1 627 401
- US-B1- 6 224 319

## Beschreibung

### Gebiet der Erfindung

Die Erfindung betrifft eine zur Handhabung von beispielsweise elektrischen oder elektronischen Teilen geeignete Handhabungsvorrichtung.

### Hintergrund der Erfindung

Eine Handhabungsvorrichtung nach dem Oberbegriff des Anspruchs 1 ist beispielsweise aus der US 6,224,319 B1 bekannt. Diese Handhabungsvorrichtung umfasst zwei um eine gemeinsame Drehachse schwenkbare innere Arme, an denen jeweils ein äußerer Arm angelenkt ist. Die äußeren Arme sind mit einer beispielsweise zum Transport von Siliziumwafern nutzbaren Plattform gekoppelt. Die Plattform weist zwei kreisrunde Öffnungen auf, in denen jeweils ein Lager zur Verbindung mit einem äußeren Arm aufgenommen ist. Mit der Vorrichtung nach der US 6,244,319 B1 ist es möglich, die Plattform über das Zentrum der Vorrichtung hinaus zu verfahren.

Eine weitere Handhabungsvorrichtung ist zum Beispiel aus der WO 93/07997 bekannt. Diese ist als Roboter mit direktem Antriebssystem ausgebildet.

### Aufgabe der Erfindung

Der Erfindung liegt die Aufgabe zugrunde, eine Handhabungsvorrichtung, welche zwei um eine gemeinsame Drehachse schwenkbare innere Arme und zwei mit diesen verbundene, gemeinsam eine Plattform tragenden äußere Arme aufweist, anzugeben, die ein Verfahren der Plattform über die Drehachse der inneren Arme hinweg ermöglicht und sich zugleich durch einen besonders einfachen konstruktiven Aufbau auszeichnet.

### Zusammenfassung der Erfindung

Diese Aufgabe wird erfindungsgemäß gelöst durch eine Handhabungsvorrichtung mit den Merkmalen des Anspruchs 1. Die Handhabungsvorrichtung weist eine erste Lagervorrichtung auf, welche einen Anlenkpunkt von zwei inneren Schwenkarmen definiert, wobei an den dem Anlenkpunkt abgewandten Enden der inneren Schwenkarme jeweils ein äußerer Schwenkarm angelenkt ist. Die beiden äußeren Schwenkarme tragen gemeinsam eine Plattform, welche in einer zur Drehachse der ersten Lagervorrichtung normalen Ebene verfahrbar ist. Die Plattform ist mittels einer einzigen Lagervorrichtung, nämlich eines äußeren Dreiringlagers, schwenkbeweglich mit den beiden äußeren Schwenkarmen verbunden. Die vier Schwenkarme der Handhabungsvorrichtung bilden somit insgesamt eine Viergelenkkette. Die erste Lagervorrichtung ist vorzugsweise ebenso wie das äußere Dreiringlager als Dreiring-Wälzlagerung ausgebildet. Als Wälzkörper dieser Lagerungen sind beispielsweise Kugeln oder Zylinderrollen geeignet. Im letztgenannten Fall sind die Wälzlagerungen vorzugsweise als Kreuzrollenlager gestaltet. In jedem Fall können die verschieden Wälzkörperreihen eines Dreiringslagers entweder in einer gemeinsamen Ebene oder in voneinander beanstandeten Ebenen angeordnet sein.

Gemäß einer bevorzugten Ausgestaltung ist konzentrisch zur ersten Lagervorrichtung eine Synchronisationsscheibe angeordnet, welche mechanisch derart mit den inneren Schwenkarmen gekoppelt ist, dass bei einer Verschwenkung eines inneren Schwenkarms relativ zur Synchronisationsscheibe um einen bestimmten Winkel der andere innere Schwenkarm relativ zur Synchronisationsscheibe um den gleichen Winkel, jedoch in die entgegengesetzte Richtung verschwenkt wird. Zur Realisierung dieser Synchronisationsfunktion ist beispielsweise ein Zahnradgetriebe, insbesondere ein Kegelradgetriebe, geeignet. Die Synchronisationsscheibe ist in diesem Fall mit dem Kegelradträger fest verbunden oder identisch. Die Drehachse der Synchronisationsscheibe stimmt mit der Drehachse der ersten Lagervorrichtung, das heißt der inneren Schwenkachse der inneren Lagerarme, überein.

Nach einer besonders vorteilhaften Weiterbildung ist die Synchronisationsscheibe als Zahnriemenscheibe ausgebildet oder mit einer solchen drehfest verbunden. Die Zahnriemenscheibe dient zusammen mit einem Zahnriemen und einer zweiten Riemenscheibe, welche konzentrisch zur Drehachse zwischen einem inneren Schwenkarm und einem äußeren Schwenkarm angeordnet ist, dazu, die Bewegung des äußeren Schwenkarms mit der Bewegung des inneren Schwenkarms zu synchronisieren. Die äußere, am Drehpunkt zwischen dem inneren Schwenkarm und dem äußeren Schwenkarm angeordnete Riemenscheibe weist den halben Durchmesser und damit die halbe Zähnezahl wie die innere, als Synchronisationsscheibe bezeichnete Zahnriemenscheibe auf. Anstelle eines Zahnriemens kann auch eine Kette oder ein anders Zugmittel zum Einsatz kommen.

Zum Antrieb der inneren Schwenkarme sind vorzugsweise unabhängig voneinander ansteuerbare Antriebsvorrichtungen vorgesehen. Werden mittels der Antriebsvorrichtungen die beiden inneren Schwenkarme um den gleichen Betrag, jedoch in entgegengesetzte Richtungen verschwenkt, so verfährt die Plattform längs einer Geraden, während die Synchronisationsscheibe in unveränderter Winkelposition verbleibt. Durch die Synchronisation des ersten inneren Schwenkarms mit dem zweiten inneren Schwenkarms mittels des Zahnradgetriebes und die gleichzeitige Synchronisation eines inneren Schwenkarms mit dem daran abgelenkten äußeren Schwenkarm mittels des Riemengetriebes ist die zwei Freiheitsgrade aufweisende Viergelenkkette definiert positionierbar. Als zwei Parameter, welche die Positionierung der Schwenkarme eindeutig festlegen, sind beispielsweise die Winkelposition der Synchronisationsscheibe und der zwischen den inneren Schwenkarmen eingeschlossene Winkel geeignet.

Die erste Lagervorrichtung, die beiden Lager zwischen den inneren Schwenkarmen und den äußeren Schwenkarmen, sowie das äußere Dreiringlager werden zusammenfassend als Gelenke der Handhabungsvorrichtung bezeichnet. Hierbei stellen die jeweils zwischen einem inneren Schwenkarm und einem äußeren Schwenkarm angeordnete Gelenke die mittleren Gelenke der Handhabungsvorrichtung dar. Unter der Vorraussetzung, dass die absolute Winkelposition eines jeden inneren Schwenkarms mittels der jeweiligen Antriebsvorrichtung separat einstellbar ist, ist zum Betrieb der Handhabungsvorrichtung keine gesonderte Synchronisation zwischen einem inneren und einem äußeren Schwenkarm, etwa mittels des oben erläuterten Riementriebs, erforderlich. Da jedoch Spiel innerhalb der Handhabungsvorrichtung unvermeidlich ist, trägt eine solche Synchronisation zur Erhöhung der Präzision, insbesondere der Wiederholgenauigkeit beim Verfahren der Plattform, bei. In besonders bevorzugter Ausgestaltung ist nicht nur zwischen dem ersten inneren Schwenkarm und dem daran angelenkten ersten äußeren Schwenkarm, sondern auch zwischen dem zweiten inneren Schwenkarm und dem zweiten äußeren Schwenkarm eine mechanischen Synchronisierung, insbesondere mittels eines Riementriebs, gegeben. Zwar bedeutet dies theoretisch eine Überbestimmung des mechanischen Systems, doch werden mechanische Verspannungen durch die Elastizität der gewählten Komponenten, insbesondere Riemen, vermieden.

Die Rotationsachse der ersten Lagervorrichtung sowie die Rotationsachse des äußeren Dreiringlagers liegen in einer gemeinsamen Ebene, zu der die Plattform in bevorzugter Ausgestaltung nicht drehbar ist. Dies bedeutet, dass die äußeren Schwenkarme ebenso wie die inneren Schwenkarme stets symmetrisch zur genannten Ebene bewegt werden, während die Plattform immer mittig von der Ebene geschnitten wird. Um dies zu erreichen, ist theoretisch eine mechanische Synchronisation zwischen einem der äußeren Schwenkarme und der Plattform ausreichend. Vorzugsweise jedoch sind beide äußeren Schwenkarme zugleich mit der Plattform mechanisch synchronisiert. Zur Erfüllung dieser Funktion ist analog zur Synchronisationsvorrichtung an der ersten Lagervorrichtung ein Zahnradgetrieben, insbesondere ein Kegelradgetriebe, geeignet. Im Fall des äußeren Dreiringlagers ist hierbei eine Synchronisationsscheibe drehfest mit der Plattform verbunden.

Nachfolgend wir ein Ausführungsbeispiel der Erfindung anhand einer Zeichnung näher erläutert. Hierin zeigen:

### Kurze Beschreibung der Zeichnungen

- Figur 1: in vereinfachter Darstellung eine Draufsicht auf eine Handha- bungsvorrichtung in einer ersten Positionierung,
- Figur 2: die Handhabungsvorrichtung in einer zweiten Positionierung,
- Figur 3: eine Explosionsdarstellung der Handhabungsvorrichtung,
- Figur 4: eine Draufsicht auf die Handhabungsvorrichtung in Mittelstellung,
- Figur 5: einen Schnitt durch die Anordnung nach Figur 4,
- Figuren 6-8: verschiedene Varianten eines Dreiringlagers der Handhabungs- vorrichtung.

### Ausführliche Beschreibung der Zeichnung

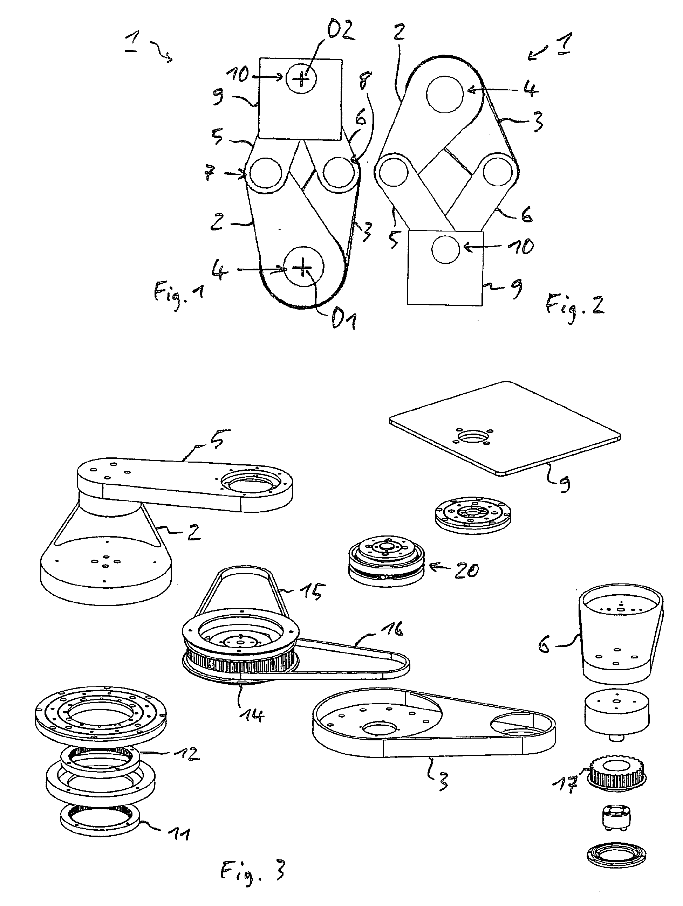

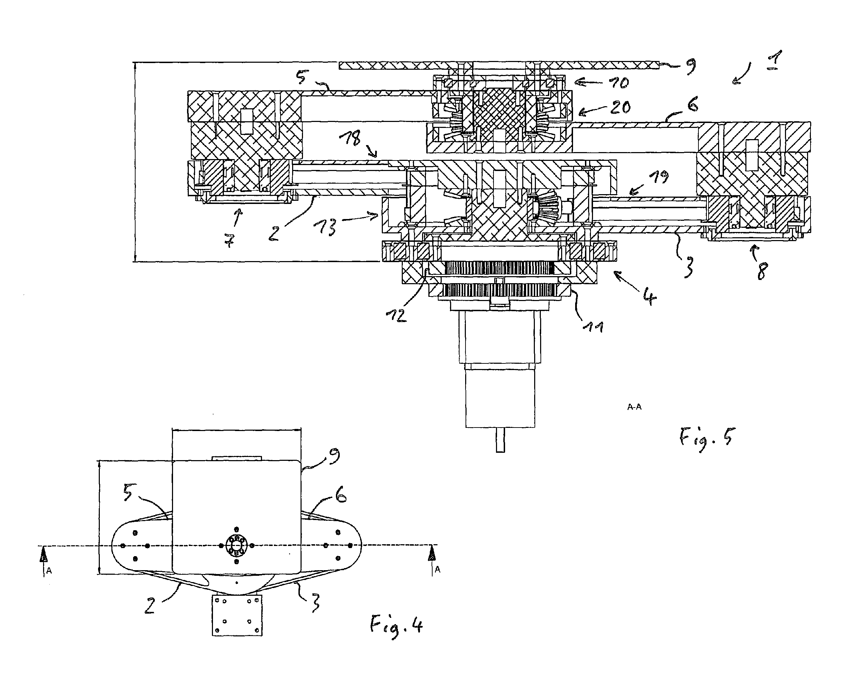

Die Figuren 1 bis 5 zeigen eine Handhabungsvorrichtung 1, hinsichtlich deren prinzipieller Funktion auf die DE-Patentanmeldung 10 2006 018 590.0 verwiesen wird. Die Handhabungsvorrichtung 1 weist zwei innere Schwenkarme 2, 3 auf, welche mittels einer ersten Lagervorrichtung 4 um eine gemeinsame Drehachse D1, die im Allgemeinen ortsfest ist, schwenkbar sind. An jedem inneren Schwenkarm 2, 3 ist ein äußerer Schwenkarm 5, 6 mittels jeweils eines mittleren Lagers 7, 8, insbesondere eines Wälzlagers, angelenkt. Die beiden äußeren Schwenkarme 5, 6 tragen zusammen eine Plattform 9, wobei sie mit dieser durch ein äußeres Dreiringlager 10, dessen Drehachse mit D2 bezeichnet ist, schwenkbeweglich verbunden sind. Das äußere Dreiringlager 10, die ebenfalls als Dreiringlager ausgebildete erste Lagervorrichtung 4, sowie die mittleren Lager 7, 8 werden zusammenfassend als Gelenke der Handhabungsvorrichtung 1 bezeichnet und bilden zusammen mit den Schwenkarmen 2, 3, 5, 6 eine Viergelenkkette. Wie insbesondere ein Vergleich der Figuren 1, 2, 5 veranschaulicht, ist es möglich, die Plattform 9 über die erste Lagervorrichtung 4 hinweg zu verfahren, wobei in der Anordnung nach Figur 4 die Drehachsen D1, D2 zusammenfallen.

Jeder innere Schwenkarm 2, 3 ist über einen Zahnring 11, 12 gesondert antreibbar. Damit sind radiale Bewegungen, Schwenkbewegungen oder beliebig kombinierte Bewegungen der Plattform 9 realisierbar. Mit den beiden zur Drehachse D1 konzentrischen Zahnringen 11, 12 ist über ein Kegelradgetriebe 13 eine Synchronisationsscheibe 14 mechanisch gekoppelt. Es handelt sich hierbei um eine Zahnriemenscheibe, welche bei einer Verschwenkung des ersten inneren Schwenkarms 2 um einen ersten Schwenkwinkel und einer gleichzeitigen Verschwenkung des zweiten inneren Schwenkarms 3 um einen zweiten Schwenkwinkel um die Hälfte der Summe der beiden Schwenkwinkel verdreht wird. Wird beispielsweise der erste innere Schwenkarm 2 um einen bestimmten Schwenkwinkel in einer ersten Richtung verdreht und der zweite Schwenkarm 3 gleichzeitig um den betragsmäßig gleichen Schwenkwinkel in der entgegengesetzten Richtung verdreht, so bleibt die Zahnriemenscheibe 14 in unveränderter Winkelposition. Die Plattform 9 wird hierbei, bezogen auf die erste Drehachse D1, ausschließlich in radialer Richtung verlagert. Einen anderen Extremfall stellt der Antrieb der beiden Zahnringe 11, 12 mit übereinstimmender Winkelgeschwindigkeit in derselben Drehrichtung dar: In diesem Fall bleibt die Winkelrelation zwischen der Synchronisationsscheibe 14 und den Zahnringen 11, 12 unverändert. Die zweite Drehachse D2 wird damit relativ zur ersten Lagervorrichtung 4 auf einer Kreisbahn verschwenkt.

Um die Synchronisationsscheibe 14 sind zwei Zahnriemen 15, 16 gelegt, welche jeweils innerhalb eines inneren Schwenkarms 2, 3 verlaufen und um eine zweite Riemenscheibe 17 gelegt sind, welche drehfest mit einem äußeren Schwenkarm 5, 6 verbunden ist. Die zweite Riemenscheibe 17 weist entsprechend der gewünschten Synchronisation zwischen dem äußeren Schwenkarm 5, 6 und dem inneren Schwenkarm 2, 3 den halben Durchmesser der inneren Zahnriemenscheibe 14 auf. Mit dem Kegelradgetriebe 13 und den beiden die Riemen 15, 16 umfassenden, insgesamt mit den Bezugszeichen 18, 19 gekennzeichneten Zugmittelgetrieben umfasst die Handhabungsvorrichtung 1 somit insgesamt drei Synchronisationsvorrichtungen, welche der Viergelenkkette zuzurechnen sind. Eine weitere Synchronisationsvorrichtung 20 stellt sicher, dass die Plattform 9 stets in unveränderter Winkelposition zu einer durch die Drehachsen D1 und D2 gelegte Ebene bleibt. Die Synchronisationsvorrichtung 20 ist analog der die Synchronisationsscheibe 14 umfassenden so genannten inneren Synchronisationsvorrichtung als Kegelradgetriebe aufgebaut und wird auch als äußere Synchronisationsvorrichtung bezeichnet.

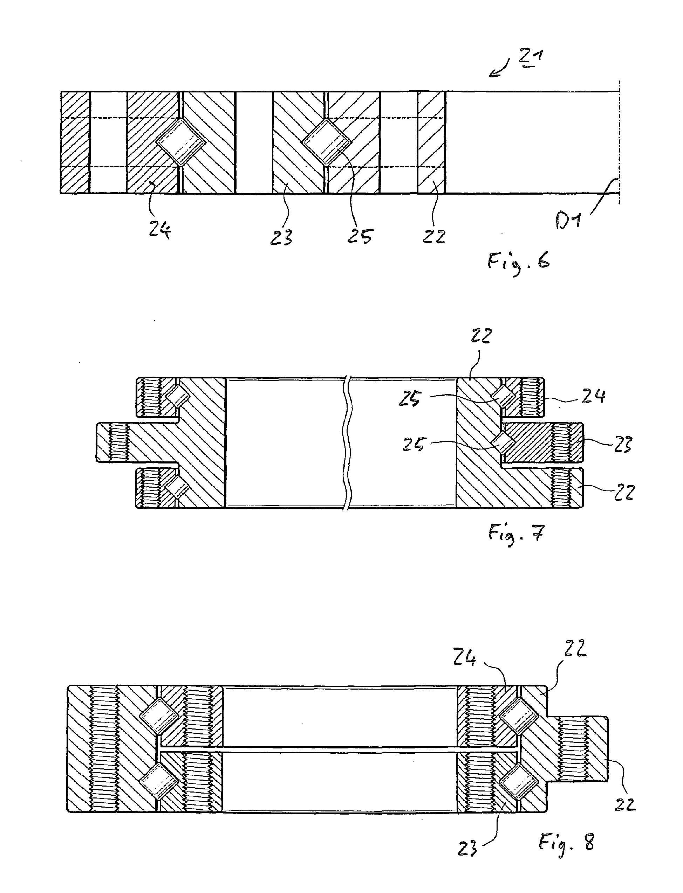

In den Figuren 6 bis 8 sind verschiedene mögliche Bauformen eines Dreiringlagers 21 dargestellt, welches sowohl als erste Lagervorrichtung 4 als auch als äußeres Dreiringlager 10 der Handhabungsvorrichtung 1 verwendbar ist. Jedes Dreiringlager 21 weist einen ersten Ring 22 und in konzentrischer Anordnung hierzu einen zweiten Ring 23 sowie einen dritten Ring 24 auf, wobei alle Ringe 22, 23, 24 unabhängig voneinander verdrehbar sind. Als Wälzkörper 25 der Dreiringlager 21 sind Zylinderrollen vorgesehen; es handelt sich um Kreuzrollenlager. Die als Kreuzrollenlager ausgebildeten Dreiring-Wälzlager 21 sind zur Aufnahme von Radial- und Axialbelastungen ebenso wie zur Aufnahme von Kippmomenten geeignet. Im Fall der Verwendung als erste Lagervorrichtung 4 ist beispielsweise der erste Ring 22 gestellfest angeordnet, während die beiden anderen Ringe 23, 24 mit den inneren Schwenkarmen 2, 3 verbunden sind. Im Fall des äußeren Dreiringlagers 10 ist dagegen beispielsweise der erste Ring 22 des Dreiringlagers 21 starr mit der Plattform 9 verbunden, während die Ringe 23, 24 mit den äußeren Schwenkarmen 5, 6 verschraubt sind. Dank der zwei Dreiringlager 4, 10 weist die Handhabungsvorrichtung 1 insgesamt lediglich vier Gelenke 4, 7, 8, 10 auf.

### Bezugszeichenliste

- 1: Handhabungsvorrichtung
- 2,3: innere Schwenkarme
- 4: Lagervorrichtung
- 5,6: äußere Schwenkarme
- 7: mittleres Lager
- 8: mittleres Lager
- 9: Plattform
- 10: äußeres Dreiringlager
- 11,12: konzentrische Zahnringe
- 13: Kegelradgetriebe
- 14: Synchronisationsscheibe
- 15,16: Zahnriemen
- 17: Riemenscheibe
- 18,19: Zugmittelgetriebe
- 20: Synchronisationsvorrichtung
- 21: Dreiringlager
- 22: erster Ring
- 23: zweiter Ring
- 24: dritter Ring
- 25: Wälzkörper
- D1,D2: Drehachsen

## Patentansprüche

1. Handhabungsvorrichtung (1), mit einer ersten Lagervorrichtung (4), welche einen Anlenkpunkt zweier innerer Schwenkarme (2, 3) bildet, an welchen jeweils ein äußerer Schwenkarm (5, 6) angelenkt ist, wobei die beiden äußeren Schwenkarme (5, 6) eine Plattform (9) tragen, **dadurch gekennzeichnet, dass** die Plattform (9) mittels eines äußeren Dreiringlagers (10) schwenkbeweglich mit den äußeren Schwenkarmen (5, 6) verbunden ist.

2. Handhabungsvorrichtung (1) nach Anspruch 1, **dadurch gekennzeichnet, dass** das äußere Dreiringlager (10) als Wälzlager ausgebildet ist.

3. Handhabungsvorrichtung (1) nach Anspruch 2, **dadurch gekennzeichnet, dass** das äußere Dreiringlager (10) als Kreuzrollenlager ausgebildet ist.

4. Handhabungsvorrichtung (1) nach einem der Ansprüche 1 bis 3, **dadurch gekennzeichnet, dass** die erste Lagervorrichtung (4) als Dreiring-Wälzlager (10) ausgebildet ist.

5. Handhabungsvorrichtung (1) nach Anspruch 4, **dadurch gekennzeichnet, dass** die erste Lagervorrichtung (4) als Kreuzrollenlager ausgebildet ist.

6. Handhabungsvorrichtung (1) nach einem der Ansprüche 1 bis 5, **gekennzeichnet durch** eine konzentrisch zur ersten Lagervorrichtung (4) angeordnete Synchronisationsscheibe (14), welche mechanisch derart mit den inneren Schwenkarmen (2, 3) gekoppelt ist, dass sie bei einer Verschwenkung des ersten inneren Schwenkarms (2) relativ zum zweiten inneren Schwenkarm (3) mit dem halben Schwenkwinkel relativ zu jedem der Schwenkarme (2, 3) mitdreht.

7. Handhabungsvorrichtung (1) nach Anspruch 6, **dadurch gekennzeichnet, dass** die Synchronisationsscheibe (14) als Zahnriemenscheibe ausgebildet ist.

8. Handhabungsvorrichtung (1) nach Anspruch 6 oder 7, **dadurch gekennzeichnet, dass** die Synchronisationsscheibe (14) mittels eines Zahnradgetriebes (13) mit den beiden inneren Schwenkarmen (2,3) gekoppelt ist.

9. Handhabungsvorrichtung (1) nach Anspruch 8, **dadurch gekennzeichnet, dass** das Zahnradgetriebe (13) als Kegelradgetriebe ausgebildet ist.

10. Handhabungsvorrichtung (1) nach einem der Ansprüche 1 bis 9, **dadurch gekennzeichnet, dass** die Plattform (9) derart mechanisch mit den beiden äußeren Schwenkarmen (5, 6) gekoppelt ist, dass diese stets symmetrisch zur Plattform (9) angeordnet sind.

11. Handhabungsvorrichtung (1) nach Anspruch 10, **dadurch gekennzeichnet, dass** zur mechanischen Kopplung der Plattform (9) mit den beiden äußeren Schwenkarmen (5, 6) ein Zahnradgetriebe (20) vorgesehen ist.

12. Handhabungsvorrichtung (1) nach Anspruch 11, **dadurch gekennzeichnet, dass** das die Schwenkbewegung der beiden äußeren Schwenkarme (5, 6) relativ zur Plattform (9) synchronisierende Zahnradgetriebe (20) als Kegelradgetriebe ausgebildet ist.

## Claims

1. Handling apparatus (1), having a first bearing apparatus (4) which forms an articulation point of two inner pivot arms (2, 3), on which in each case an outer pivot arm (5, 6) is articulated, the two outer pivot arms (5, 6) carrying a platform (9), **characterized in that** the platform (9) is connected in a pivotably movable manner to the outer pivot arms (5, 6) by means of an outer three-ring bearing (10).

2. Handling apparatus (1) according to Claim 1, **characterized in that** the outer three-ring bearing (10) is configured as an anti-friction bearing.

3. Handling apparatus (1) according to Claim 2, **characterized in that** the outer three-ring bearing (10) is configured as a cross-rolling bearing.

4. Handling apparatus (1) according to one of Claims 1 to 3, **characterized in that** the first bearing apparatus (4) is configured as a three-ring anti-friction bearing (10).

5. Handling apparatus (1) according to Claim 4, **characterized in that** the first bearing apparatus (4) is configured as a cross-rolling bearing.

6. Handling apparatus (1) according to one of Claims 1 to 5, **characterized by** a synchronization disc (14) which is arranged concentrically with respect to the first bearing apparatus (4) and is coupled mechanically to the inner pivot arms (2, 3) in such a way that it corotates with half the pivot angle relative to each of the pivot arms (2, 3) if the first inner pivot arm (2) is pivoted relative to the second inner pivot arm (3).

7. Handling apparatus (1) according to Claim 6, **characterized in that** the synchronization disc (14) is configured as a toothed-belt pulley.

8. Handling apparatus (1) according to Claim 6 or 7, **characterized in that** the synchronization disc (14) is coupled to the two inner pivot arms (2, 3) by means of a gearwheel mechanism (13).

9. Handling apparatus (1) according to Claim 8, **characterized in that** the gearwheel mechanism (13) is configured as a bevel gear mechanism.

10. Handling apparatus (1) according to one of Claims 1 to 9, **characterized in that** the platform (9) is coupled mechanically to the two outer pivot arms (5, 6) in such a way that the latter are always arranged symmetrically with respect to the platform (9).

11. Handling apparatus (1) according to Claim 10, **characterized in that** a gearwheel mechanism (20) is provided for mechanically coupling the platform (9) to the two outer pivot arms (5, 6).

12. Handling apparatus (1) according to Claim 11, **characterized in that** the gearwheel mechanism (20) which synchronizes the pivoting movement of the two outer pivot arms (5, 6) relative to the platform (9) is configured as a bevel gear mechanism.

## Revendications

1. Dispositif de manipulation (1), comprenant un premier dispositif de palier (4), qui forme un point d'articulation de deux bras pivotants internes (2, 3), sur lesquels est à chaque fois articulé un bras pivotant externe (5, 6), les deux bras pivotants externes (5, 6) portant une plate-forme (9), **caractérisé en ce que** la plate-forme (9) est connectée au moyen d'un palier à trois bagues extérieur (10) de manière pivotante aux bras pivotants externes (5, 6).

2. Dispositif de manipulation (1) selon la revendication 1, **caractérisé en ce que** le palier à trois bagues extérieur (10) est réalisé sous forme de palier à roulement.

3. Dispositif de manipulation (1) selon la revendication 2, **caractérisé en ce que** le palier à trois bagues extérieur (10) est réalisé sous forme de palier à rouleaux croisés.

4. Dispositif de manipulation (1) selon l'une quelconque des revendications 1 à 3, **caractérisé en ce que** le premier dispositif de palier (4) est réalisé sous forme de palier à roulement à trois bagues (10).

5. Dispositif de manipulation (1) selon la revendication 4, **caractérisé en ce que** le premier dispositif de palier (4) est réalisé sous forme de palier à rouleaux croisés.

6. Dispositif de manipulation (1) selon l'une quelconque des revendications 1 à 5, **caractérisé par** un disque de synchronisation (14) disposé concentriquement au premier dispositif de palier (4), qui est accouplé mécaniquement aux bras pivotants internes (2, 3) de telle sorte qu'il tourne conjointement lors d'un pivotement du premier bras pivotant interne (2) par rapport au deuxième bras pivotant interne (3) avec le demi-angle de pivotement par rapport à chacun des bras pivotants (2, 3).

7. Dispositif de manipulation (1) selon la revendication 6, **caractérisé en ce que** le disque de synchronisation (14) est réalisé sous forme de disque à courroie dentée.

8. Dispositif de manipulation (1) selon la revendication 6 ou 7, **caractérisé en ce que** le disque de synchronisation (14) est accouplé aux deux bras pivotants internes (2, 3) au moyen d'une transmission à roue dentée (13).

9. Dispositif de manipulation (1) selon la revendication 8, **caractérisé en ce que** la transmission à roue dentée (13) est réalisée sous forme de transmission à roue conique.

10. Dispositif de manipulation (1) selon l'une quelconque des revendications 1 à 9, **caractérisé en ce que** la plate-forme (9) est accouplée mécaniquement aux deux bras pivotants externes (5, 6) de telle sorte que ceux-ci soient toujours disposés symétriquement par rapport à la plate-forme (9).

11. Dispositif de manipulation (1) selon la revendication 10, **caractérisé en ce que** pour l'accouplement mécanique de la plate-forme (9) aux deux bras pivotants externes (5, 6), on prévoit une transmission à roue dentée (20).

12. Dispositif de manipulation (1) selon la revendication 11, **caractérisé en ce que** la transmission à roue dentée (20) synchronisant le mouvement de pivotement des deux bras pivotants externes (5, 6) par rapport à la plate-forme (9) est réalisée sous forme de transmission à roue conique.
